# EUROPEAN PATENT SPECIFICATION

(11) **EP 0 772 106 B1**
(45) Date of publication and mention of the grant of the patent: **19.12.2001**
(21) Application number: 96116622.0
(22) Date of filing: 17.10.1996
(51) Int. Cl.: G05B 19/042

(54) **Distributed system for controlling application of molten thermoplastic material**
Verteiltes System zur Regelung der Aufbringung von geschmolzenem thermoplastischem Material
Système distribué pour la commande de dépôt de matériau thermoplastique fondu

(30) Priority: 02.11.1995 US 552009
(43) Date of publication of application: 07.05.1997
(73) Proprietor: NORDSON CORPORATION, Westlake, OH 44145 (US)
(72) Inventor: Means, Scott B., Lawrenceville, Georgia 30244 (US); Crawford, Karen J., Mableton, Georgia 30054 (US); Lynch, Michael S., Norcross, Georgia 30092 (US)
(74) Representative: Eisenführ, Speiser & Partner

(56) References cited:
- US-A- 4 108 623
- US-A- 4 459 146
- US-A- 4 545 504

## Description

### BACKGROUND OF THE INVENTION

### 1. Field of the Invention

This invention relates generally to systems for melting and applying molten thermoplastic material to a product. More particularly, the invention relates to a distributed control system for controlling application of such material using a number of applicators.

### 2. Description of the Prior Art

A conventional apparatus for applying molten thermoplastic material, such as an adhesive, for example, includes as the basic components a melter, one or more applicators and a control system. A melter typically includes a tank having a hopper that holds the solid unmelted material, a heating grid for applying heat to the material at the bottom of the hopper, and a reservoir for holding the molten material. The molten material is then pumped from the reservoir to an applicator or dispenser through a hydraulic system of supply hoses, pumps, valves and so on. The applicator or dispenser is an apparatus that applies the molten material to a product, such as, for example, a disposable diaper. Applicators are typically pressure fed or metered and include temperature devices such as heaters and sensors, and solenoids, and in the case of metered applicators, motor, pump and related pressure devices such as transducers.

US patent 4,545,504 discloses an apparatus for dispensing a hot melt thermoplastic which consists of a hopper containing granular thermoplastic, an extruder for melting the molten thermoplastic and delivering it to a manifold and then to an applicator for dispensing the molten thermoplastic. The apparatus comprises a control system for the extruder applicator and an extruder-accumulator-applicator. The control system includes a number of circuits comprising relay controls and relays, respectively. Energizing a particular relay control may cause corresponding relays to close such that power is provided through a particular one of the circuits. Thus various components of the applicator, such as an applicator valve, are controlled.

Control systems used heretofore for controlling a melter and associated applicators are limited in several respects. In a typical system, system control is centralized and installed in or integral with the melter control system, and each applicator is individually cabled up to the control system and melter hydraulics (such as, for example, a manifold arrangement attached to the reservoir). This involves substantial numbers and lengths of individual or dedicated power and control lines from the melter system controller to each applicator, perhaps on the order of forty to sixty wires for a metered applicator. A pressure fed applicator may require, for example, twelve to twenty four wires. Thus, when a melter is used for supplying material to a plurality of applicators, a significant wiring layout must be accomplished along with the usual installation and troubleshooting problems associated therewith.

The use of dedicated hardwired direct connections from each applicator individually back to the melter/system controller also substantially reduces flexibility of the system for making configuration changes and for expandability. For example, upgrading an existing system may be limited by the number of control channels available and the power handling capacity of the melter system. Of course, melters can be designed with excess capacity based on a projected long term need, but this results in idle control and unused system power capacity until such capacity is needed, which can involve a substantial waste of up front design cost and effort. Although known melter systems can accommodate system modifications, such as, for example, changing over an application from pressure fed to metered, such changes heretofore are cumbersome and costly because they involve having to reconfigure not only the application end of the line, but also the melter system control. In the example of changing an application from pressure fed to metered, the melter system control may need to have a motor control and or temperature control added to accommodate the metered applicator. Sometimes, entire additional melters must be provided to accomplish application changes. Stand-alone controllers are frequently required. Additionally, the number of melters required to accomplish all applications must be increased due to power and control capacity limitations of the melters.

Expandability of known systems frequently is limited by electrical power capacity of the melter control system. The delivery of additional material to added on applicators often is a straightforward modification of the manifold and pump delivery system. However, shop power to operate the additional applications is typically part of the individual cabling from the melter to each application. Therefore, the number of applications that can be connected to a melter system may be limited by the electrical power limitations in the melter, unless an entire switch gear and wiring is to be replaced, which can be a very expensive operation. Thus, the expandability of the control system tends to be substantially more limited than the hydraulic system architecture could otherwise accommodate. Overdesigning the melter initially to have sufficient electrical power for expanding the system results in excess capacity and may needlessly increase the size, cost and complexity of the melter. In other cases, additional stand-alone melters are necessary to provide the necessary control and power capacity.

Typical control systems heretofore have not been particularly user friendly, in the sense that they typically require the operator to know which control channels are connected to which applicator hardware because each applicator system is separately configured to the central controller, along with having to interpret and recall the various control system designations rather than simply being able to rely on common terminology to group the various elements together according to each application.

The objectives exist, therefore, to provide a better system control design for applying molten thermoplastic material. Such a system should be flexible to accommodate configuration changes in an existing system without substantial modification of the melter, accommodate expansion of an existing system without involving a substantial modification of the melter control system, provide for expandability and flexibility to more closely match the expandability and flexibility of the hydraulic architecture, and provide a more user friendly interface during system configuration and operation.

### SUMMARY OF THE INVENTION

The present invention contemplates a significant departure from conventional centralized control systems for applying molten thermoplastic material by providing in one embodiment, a distributed system for controlling application of molten thermoplastic material to include a system controller and a network for transmitting information between the controller and a plurality of distributed control modules along the network comprising a shared bus; at least one applicator for applying the material; and a melter for supplying molten material to the at least one applicator; the melter including a plurality of melter control modules for controlling delivery of the material to the at least one applicator, with each of the melter control modules being coupled to the network; the applicator comprising at least one applicator control module, the applicator control module being coupled to the network; wherein the system controller transmits instructions to a selectable number of the control modules across the network based on a selectable application of the material, and receives across the network information from each control module used in the selected application.

These and other aspects and advantages of the present invention will be readily understood and appreciated by those skilled in the art from the following detailed description of the preferred embodiments with the best mode contemplated for practicing the invention in view of the accompanying drawings.

### BRIEF DESCRIPTION OF THE DRAWINGS

FIG. **1** is a simplified schematic diagram of a distributed control system for applying molten thermoplastic material in accordance with the invention.

FIG. **2** is a functional block diagram for a control system architecture suitable for use with the present invention.

FIG. **3** is another schematic diagram for an expanded application system as shown in FIG. **1**.

FIG. **4** is a functional block diagram of the logical relationships for a distributed application control system in accordance with the invention.

FIG. **5** is a detailed functional block diagram of control function and device relationships for a typical distributed control system for applying molten material such as in FIG. **4**.

FIGS. **6**A-**6**D illustrate exemplary a graphical user interface for configuring a distributed control system in accordance with the invention.

FIG. **7** illustrates a prior art configuration for a system for applying molten thermoplastic material.

### DETAILED DESCRIPTION OF THE PREFERRED EMBODIMENT

With reference to FIG. **7**, a conventional molten thermoplastic material application system includes a melter **1,** a pressure fed applicator **2** and a metered applicator **3.** Molten material is fed to the applicators **2** and **3** by respective supply hoses **4*a*** and return hoses ***4b.*** Shop power, such as a 230 VAC supply **5** is connected to the melter and supplied to the applicators as part of a respective wiring cable arrangement **6.** The metered applicator cable **6** could contain upwards of forty to sixty wires, while a typical wiring cable for the pressure fed applicator **2** may contain twelve to twenty-four wires. It is readily apparent that as the number of additional applicators at a manufacturing site is increased, wiring will quickly become a burden both for installation and troubleshooting and maintenance. Additionally, the centralized melter **10** control system will need to be reconfigured and perhaps significantly modified to accommodate expansion, upgrading or applicator changeover.

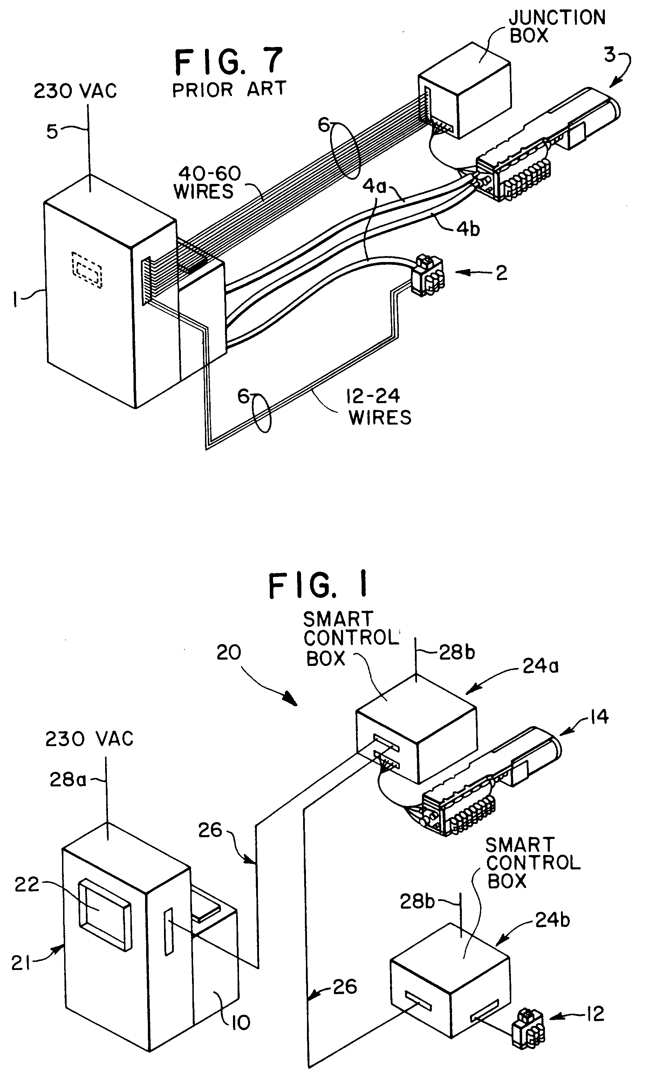

With reference to FIG. **1**, an embodiment of the invention is illustrated in simplified schematic form for purposes of describing the basic concepts of the invention. Although the descriptions that follow herein include reference to specific subsystems such as pressure fed applicators, metered applicators, microprocessor based control systems and so on, these details of the described embodiments are intended to be exemplary and should not be construed in a limiting sense. Those skilled in the art will readily appreciate that the benefits and improvements achieved with the present invention can be realized in a variety of different configurations, particularly as to the selected hardware for implementing the distributed control system. The invention is further applicable to application control of different types of material using different types of applicators.

In the basic configuration of FIG. **1,** a melter **10** is provided along with a pressure fed applicator **12** and a metered applicator **14.** Although not shown in FIG. **1** for clarity, the applicators **12** and **14** are connected to the melter **10** by supply and return hoses in a manner similar to that explained with reference to FIG. **7**.

A distributed control system **20** for controlling application of the molten thermoplastic material including control of the melter **10** and a number of applicators (in the present example, two) is provided and includes a system controller **22** which for convenience can be physically located with the melter **10**. The flexibility of the system **20**, however, easily accommodates locating the controller **22** at some other location, even a remote location, if such is desired for a particular application of the invention.

The control system **20** further includes a number of applicator control modules **24,** preferably there being a control module for each of the applicators or each type of applicator. Thus, in FIG. **1** there is a control module **24***a* for the metered applicator **14** and a control module **24***b* for the pressure fed applicator **12.** There is no physical limitation as to a particular module being used to control more than one applicator other than the control module having to contain, or being expandable to contain, an adequate control hardware and software configuration for the desired control functions. Hereinafter it is assumed that each control module controls a single applicator unless otherwise indicated, it being understood that such description is merely exemplary and not a limitation on the use of the invention.

Each control module **24** contains a suitable control module including a control circuit for controlling operation of its respective applicator. In an environment involving control of applicators such as pressure fed and metered applicators, it is expected that the applicator control modules will each contain an internal processor, such as, for example, a microprocessor based system, for carrying out the control functions, as will be described hereinafter in greater detail. Such functions include monitoring and control of temperature, pressure, solenoids, motors and so on.

In all the various embodiments, circuits, systems and subsystems described herein, those skilled in the art will appreciate that the electronic functions and circuits can be realized in many different ways. In addition to microprocessor based technologies, other available examples include microcontrollers, microcomputers, digital signal processing, analog processing, discrete digital logic circuits and so on. The system will, however, generally require a microprocessor or other communications processor, as is known in the art.

The distributed control system **20** further includes a network bus **26**, which in this example is a simple two- to twelve-wire bus. The number of wires in the network bus will be determined by the communications needs between the system controller **22** and the distributed applicator control modules. An important aspect of the invention resides in noting that the network bus **26** is shared by the various applicators **12** and **14** and that from a wiring standpoint, the shared bus is substantially the only electrical interconnection among the various electronic components of the application system. The bus **26** provides a communications link between the system controller **22** within the melter electrical box **21** and each of the applicator control modules **24.** The system controller **22** and each of the applicator control module **24** include the appropriate hardware and software for implementing the communications network across the bus **26**. In some cases, a simple twisted wire pair can be used for the bus **26**. A suitable communications network protocol commercially available is LonWorks™ LonTalk™ protocol available from ECHELON®. This network conveniently is compatible with conventional microprocessor operating systems such as WINDOWS®. The network bus **26** is used to transmit instructions and data between the system controller **22** and the applicator control modules **24**.

Those skilled in the art will readily appreciate that the exemplary description of a hardwired network is for explanation only. Other communication links can be used if so desired for a specific application, such as optical networks, RF or microwave transmission, and so on. The use of a simple hardwired connection, however, in many cases will simplify the interface between the network components and the system control hardware/software.

The distributed control system **20** is used preferably in conjunction with a distributed power system, in which shop power **28** is provided at the melter **(28***a*) and at each of the applicator sites **(28***b*). This can significantly reduce the size and cost of the switch gear associated with the melter **10,** because the supply **28***a* can be sized for the melter independent of how many applicators are hydraulically connected thereto.

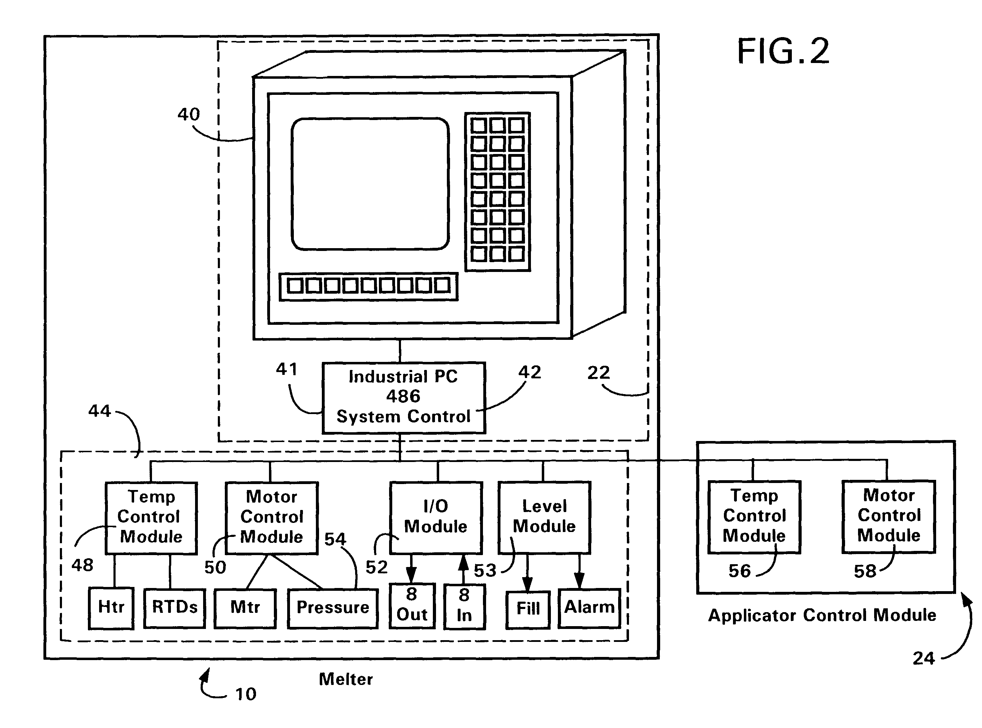

With reference to FIG. **2**, an architecture suitable for realizing the control system **20** is shown in functional block diagram form. In this embodiment, the system controller **22** is realized in the form of an operator interface **40** and an industrial computer **41**, such as an INTEL® 486 microprocessor platform running a software application under, for example, a WINDOWS® operating system **42**. Other hardware systems and operating software systems commercially available can readily be utilized, modified or custom designed if so desired, as will be appreciated by those skilled in the art.

The melter is conveniently provided with its own "control module" section **44** which includes a temperature control module **48**, a motor control module 50, an input/output (I/O) module **52** and a level control module **53**. The temperature control module **48** may include heater controls and temperature sensor (RTD) controls, and is used, for example, to control temperature of the grid at the bottom of the hopper to melt the solid thermoplastic material. The motor control module **50** is used, for example, to control the motor driving the pump which transfers the molten material to the applicators **12** and **14.** As indicated in FIG. **2,** this can include a pressure control **54,** particularly for supplying the pressure fed applicator **12**. The I/O module **52** can be used for discrete data transfer between the system controller **22** and any number of sensors and other control circuits associated with the melter **10** or with the manufacturing facility that employ the applicators. The level control module **53** is used, for example, to monitor the level of the solid thermoplastic material in the supply hopper of the melter, and may provide a signal indicating that the hopper needs to be filed and an alarm indicating that the hopper is almost empty and the system should be shutdown. As illustrated in FIG. **2**, each of the control modules **48, 50, 52** and **53** are connected to the shared network bus **26.**

The system controller **22** is also linked by the bus **26** to each applicator control module **24**, of which one is shown in FIG. **2**. The control module **24** for an applicator typically will include a temperature control module **56,** which could be the same structurally as the melter temperature control module **48**, but need not be. In the case of a control module for a metered applicator, a motor control module **58** is provided to control metered application of the molten thermoplastic material.

The hardware and software implementations of the functional boxes in FIG. **2** will depend on the particular application involved, but for convenience can be based on control and sensor circuits known to those skilled in the art and therefore need not be described in detail herein to fully understand and practice the invention. An important aspect in conjunction with the modular design of the applicator control modules **24** is the use of the communications network between each control module **24** and the system controller **22.**

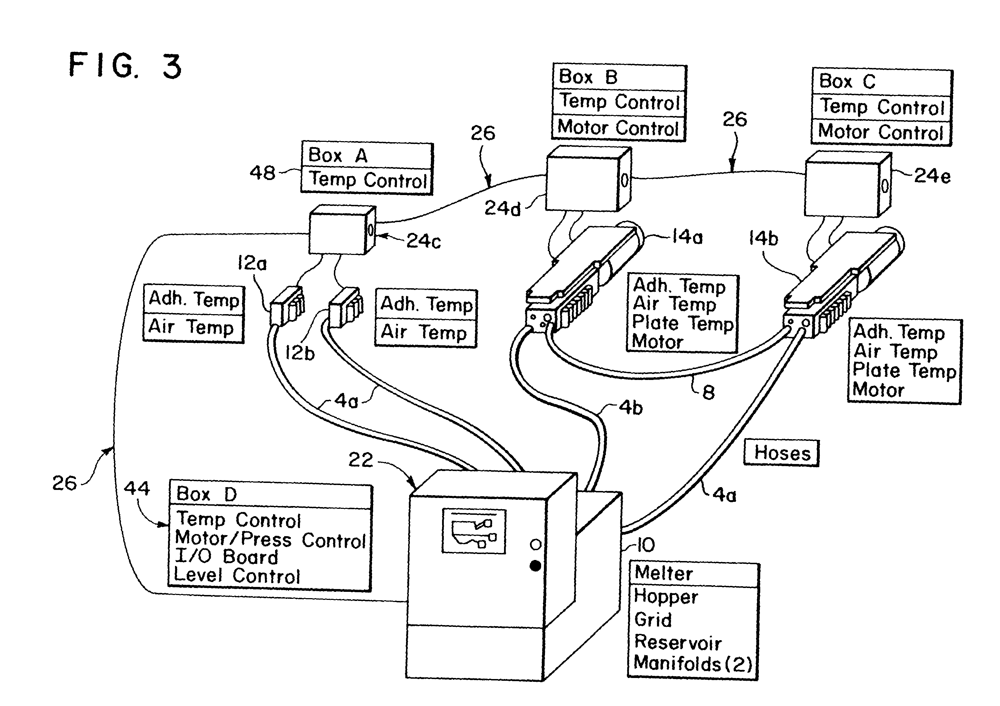

With reference next to FIG. **3**, another example of the distributed control system **20** is shown including added applicator devices. In this embodiment, a single control module **24*c*** is connected to control two pressure fed applicators **12***a* and **12***b*. Furthermore, two control modules **24***d* and **24***e* are connected to respective metered applicators **14***a* and **14***b*. The applicator control modules in FIG. **3** can be realized, for example, with the exemplary architecture illustrated in FIG. **2.**

It will be noted from FIG. **3** that the applicator control modules are linked along the shared network bus **26** back to the system controller **22** which, in this case, is at the melter **10**. The simple communication link between the system controller **22** and each of the applicator control modules **24** makes expansion, upgrading and reconfiguration of the system **20** highly flexible and convenient. Applicators can be added within the capability of the melter **10** hydraulic system architecture, rather than being limited as in the prior art by system power constraints at the melter or controller limitations such as, for example, the number of available control channels. Furthermore, reconfiguration is greatly simplified compared to prior systems. For example, if an application is to be changed from a pressure fed applicator to a metered applicator, the melter control section need not be reconfigured. The pressure fed control module is simply replaced with a metered applicator control module, and all configuration data and control instructions can be input by the operator into the system controller **20** and communicated to the application site along the network bus **26**.

As shown in FIG. **3**, the applicators are connected to the melter **10** via the supply and return hoses **4a** and **4**b. In the example shown, a jumper hose **8** connects the return port of the first metered applicator **14***b* to the input port of the second metered applicator **14*a*.** Although not used in the embodiment shown here, this daisy chain configuration of the hydraulic architecture can also be used with the pressure fed applicators **12***a* and **12***b* if so desired.

Note that in FIG. **3,** functional modular blocks are included for each control module which correspond to the functional blocks previously described herein with respect to FIG. **2**. Thus, Smart Box A in FIG. **3** is a control module for a pressure fed applicator, and includes the temperature control module **48**. Smart Box 2 and Smart Box 3 are for metered applicators and thus include the temperature control module 56 and the motor control module **58.** Also shown in FIG. **3** are some of the various sensor readings taken at the melter and applicators, which data can be transmitted back to the system controller **22** on the shared bus **26.** These sensors can include, for example, material temperature sensors (in the example of FIG. **3**, the molten material is an adhesive applied to disposable diapers and hence abbreviated "adh."), heated pattern air temperature in the applicator, motor control signals for the metered applicators and so on. Further note that the melter control box **44** ("Box D") for the melter **10** is also indicated with the included functional circuits as described with reference to FIG. **2** herein.

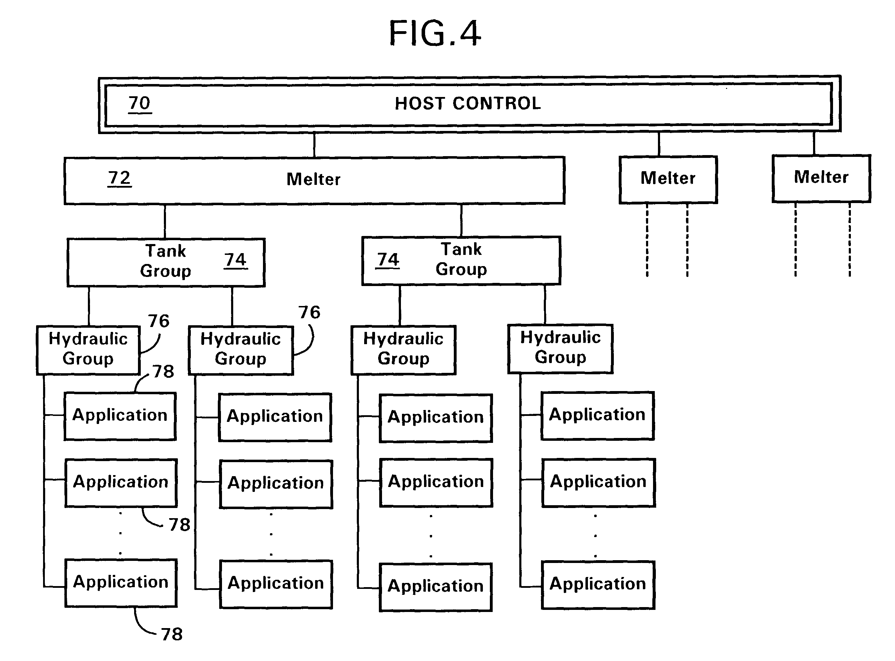

With reference next to FIG. **4**, use of the distributed control system **20** facilitates organization and control of an entire distributed application system. FIG. **4** illustrates the logical relationships for the various control aspects of an exemplary distributed system. In this embodiment, a high level host system **70**, such as an industrial personal computer or PLC, is used to interconnect, control, monitor or otherwise interface with a number of melter systems, in this case three such systems. The system **70** can be located, for example, apart from the main production area where the melters and applicators are utilized. The system **70** can provide a centralized display to provide information on all the melter systems.

Each melter system **72** can include a single enclosure for a plurality of tank groups **74.** Each tank group **74** comprises the main melting section and may consist, for example, of a hopper, grid and reservoir. A dual tank group may consist of a single hopper, two grids and two reservoirs, for example, with each reservoir feeding two hydraulic groups **76**. In the discussion herein with regard to FIG. **4**, it will be appreciated that the particular arrangements are exemplary in nature, and in practice will be selected based on the particular application needed by the designer.

Each hydraulic group **76** includes a melter manifold and the associated devices for supplying molten material for each application **78** connected to the system. These devices may include, for example, a motor, pump, manifold, hoses and the applicators. The logical relationships illustrated in FIG. **4** can be repeated as needed.

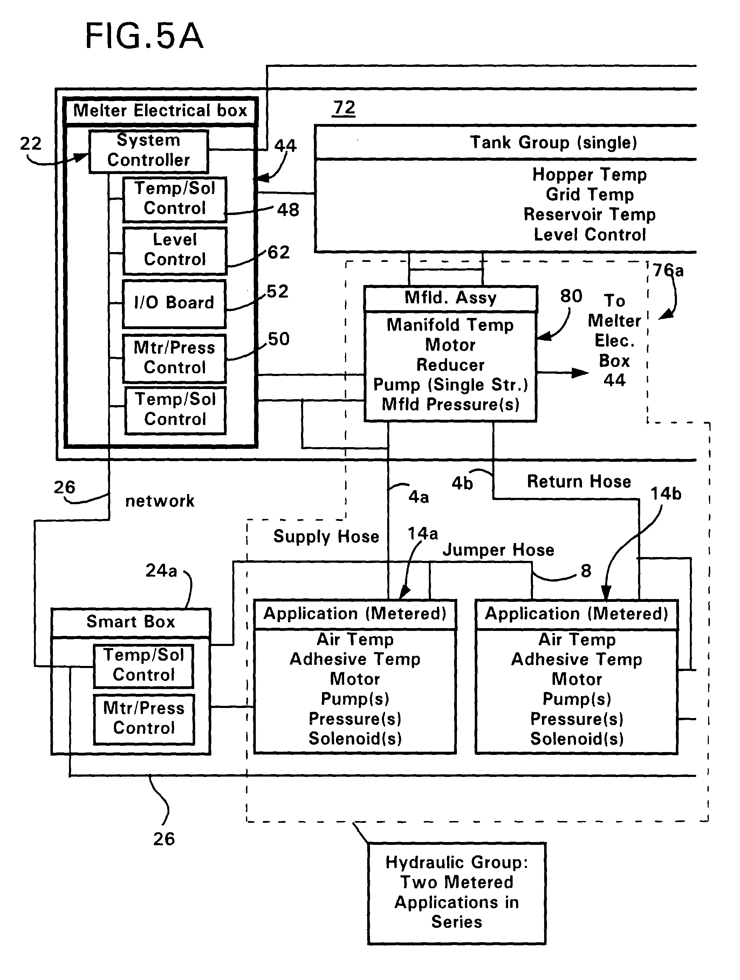

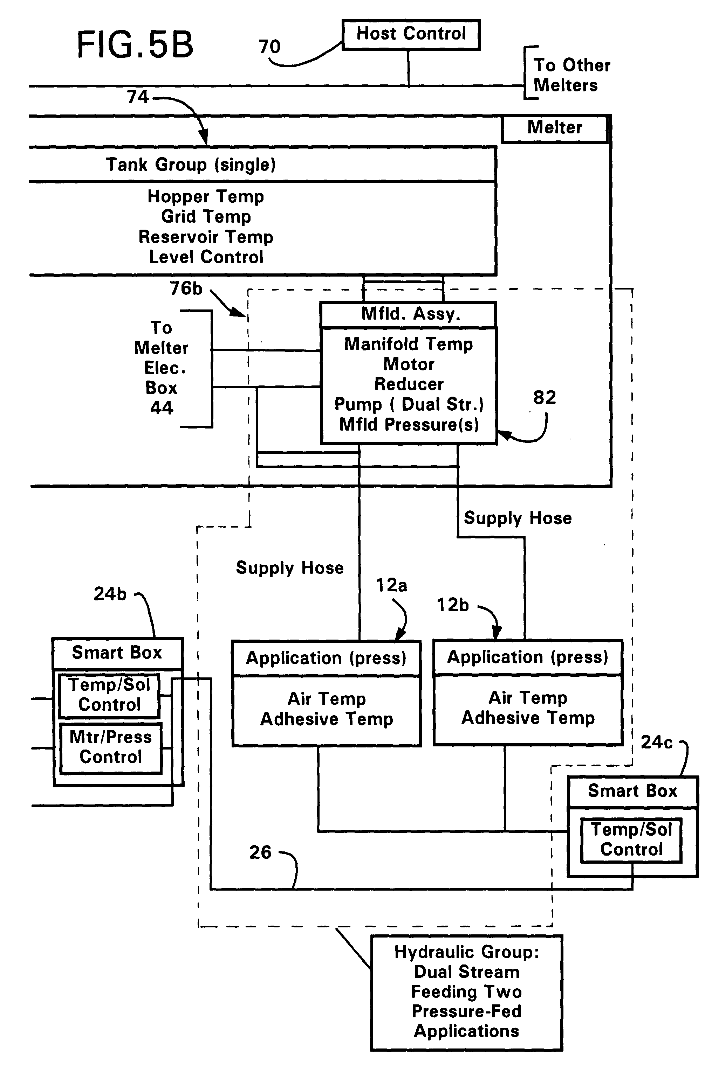

FIG. **5** illustrates in functional block form a more detailed summary of the actual physical devices that make up a typical distributed system such as shown in FIG. **4**. This detail is shown for one of the melter systems **72.** As shown, the melter **72** includes the melter electrical (control) box **44** with the previously described control modules and functions including the circuits **48, 50** and **52**. Also shown is a control module **62** corresponding to the control module **53**, for control of the level of the material in the melter hopper.

The shared bus **26** of the network provides a communication link between the system controller **22** and each of the control modules **24** associated with the applicators **12** and **14.** The logical arrangement of the various system groups are included in FIG. **5**, showing a single tank group **74** (including the associated hopper temperature, grid temperature, reservoir temperature and level control sensor data) for a first hydraulic group **76***a* and a second hydraulic group **76***b*. The first hydraulic group **76***a* includes a manifold assembly including various monitoring and control functions for the manifold temperature, motor, pump and pressure. These manifold controls are directly connected to the melter box **44** since they are physically within the melter **72** enclosure. A supply hose 4a feeds the molten material to a first metered applicator **14***a*, daisy chained by a jumper hose **8** to **a** second metered applicator **14***b*, and connected back to the manifold by a return hose 4b. The associated control module **24***a* controls the first metered applicator **14***a* and a second control module **24***b* controls the second metered applicator **14***b*, both control modules operating based on instructions and data exchanged with the system controller **22** along the shared bus **26.**

The second hydraulic group **76***b* similarly includes a manifold assembly **82** which feeds two pressure fed applicators **12***a* and **12***b*, both of which are controlled via a third control module **24***c* also connected to the shared bus **26.** Thus, from FIG. **5** it is apparent that the distributed power and control system for the application system, including the use of the communications network for electronic access to the distributed control module, greatly enhances the ability to expand the system and reconfigure the distributed applicators that can be remote from the melter **70**, with substantially reduced impact on having to reconfigure or modify the melter itself.

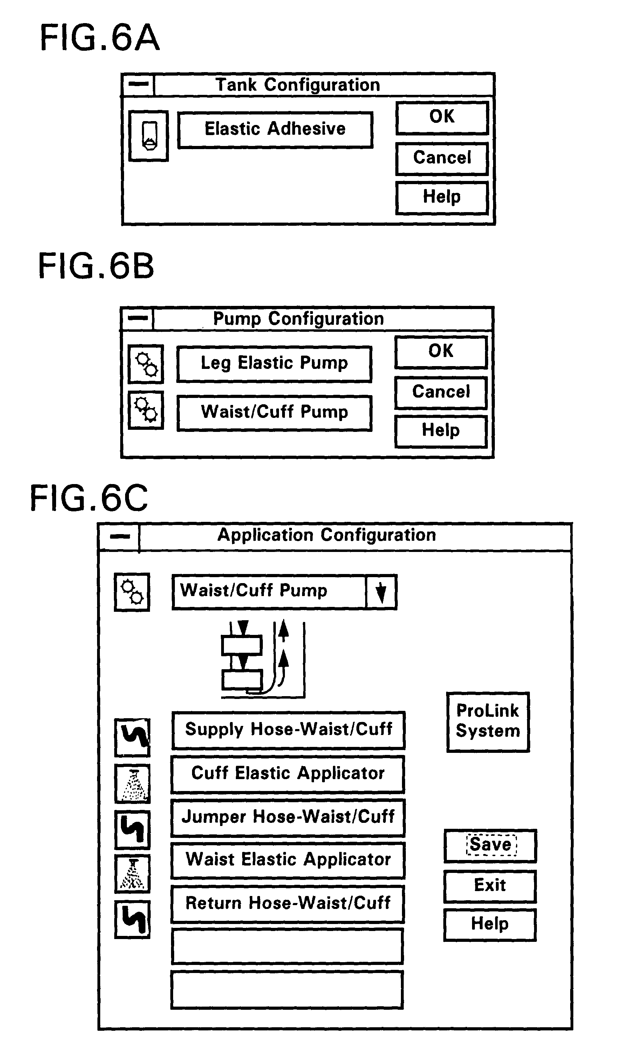

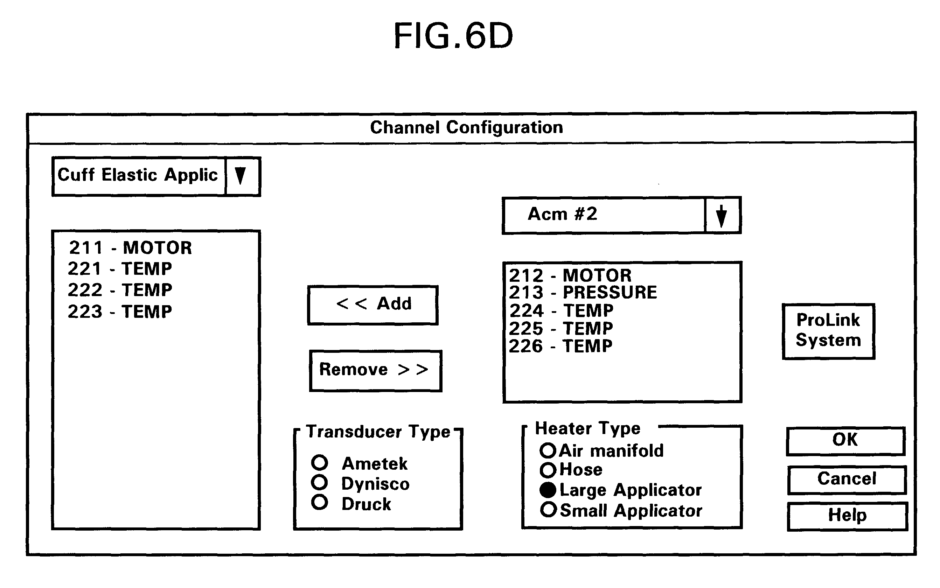

With reference next to FIGS. **6**A-**6**D, the distributed system **20** described herein is particularly well suited for use with commercially available operating systems, such as a WINDOWS graphical user interface. FIG. **6**A shows a typical tank configuration window in which the system controller **22** allows the operator to select the tank configuration. In the example of FIGS. **6**A-**6**D, the specific application is for applying adhesive to disposable diapers, so that the operator can simply enter tank name **82**, select the pump configuration, and name them. In FIG. **6**C the operator can select the applicator configuration and name specific hoses and applicators associated with each pump. In the example of FIG. **6**C, the waist/cuff pump and applicators are being configured. In FIG. **6**D, the configuration process is completed by assigning individual control channels to specific hoses and applicators. The example given is for a cuff elastic applicator connected to the waist/cuff pump (configured in FIG. **6**B).

The effect of a control system as configured using a graphical user interface, such as the examples of FIGS. **6**A-**6**D, is to provide a true logical to physical mapping which substantially simplifies the overall system complexity presented to an operator by the system controller. First, application specific grouping of independent control channels allows the channels to be collectively controlled for simplified operation. Second, the operator can easily view both the physical device and the logical names to facilitate service on the system.

Other variations and modifications of the specific embodiments herein shown and described will be apparent to those skilled in the art, all within the intended spirit and scope of the invention. While the invention has been shown and described with respect to particular embodiments thereof, these are for the purpose of illustration rather than limitation. Accordingly, the patent is not to be limited in scope and effect to the specific embodiments herein shown and described nor in any other way that is inconsistent with the extent to which the progress in the art has been advanced by the invention.

## Claims

1. A distributed system for controlling application of molten thermoplastic material comprising:
at least one applicator for applying the material; and a melter (10) for supplying molten material to set at least one applicator (12, 14);
**characterized by** a system controller (22) including a network for transmitting information between said controller (22) and a plurality of distributed control modules (24) along a shared bus (26);
said melter (10) including a plurality of melter control modules (48, 50, 52, 53) for controlling delivery of the material to said at least one applicator (12, 14), with each of said melter control modules (48, 50, 52, 53) being coupled to said network;
said applicator (12, 14) comprising at least one applicator control module (24), said applicator control module (24) being coupled to said network;
wherein said system controller (22) transmits instructions to a selectable number of said control modules (24, 48, 50, 52, 53) across said network based on a selectable application of the material, and receives across said network information from each control module (24, 48, 50, 52, 53) used in the selected application.

2. The system of claim 1, wherein said melter (10) controls temperature, pressure and delivery of molten material from the melter (10) to a first plurality of said applicators (12, 14) based on instructions received from said system controller (22) to said melter control modules (48, 50, 52, 53), and wherein each of said first plurality of applicators (12, 14) controls temperature and delivery of the material based on instructions received from said system controller (22) to said applicator control modules (24).

3. The system of claim 2, wherein said melter (10) comprises a first manifold assembly (80) for distributing the material to said first plurality of applicators (14), wherein said system controller (22) logically groups and independently controls said first plurality of applicators (14) and said first manifold assembly (80) as a hydraulic group (76).

4. The system of claim 3, wherein said system controller (22) logically controls a tank group (74) that supplies material to said first hydraulic group (76a) and a second hydraulic group (76b), said second hydraulic group (76b) comprising a second manifold assembly (82) in said melter (10) for distributing the material to a second plurality of applicators (12).

5. The system of claim 4, wherein said system controller (22) logically controls a plurality of said melters (10), each of said plurality of said melters (10) comprising at least one tank group (74) and at least one hydraulic group (76) having a plurality of applicators (12, 14).

6. The system of claim 2, wherein each of said plurality of applicators (12, 14) are selected from the group comprising pressure fed applicator (12) and metered applicator (14).

7. The system of claim 2, wherein said plurality of applicators (12, 14) comprises a plurality of metered applicators (14) hydraulically connected in a daisychain configuration and at least one pressure fed applicator (12).

8. The system of claim 1, wherein said applicator control modules (24) are contained in an applicator control box (A, B, C) at their associated applicator (12, 14), the system further comprising a distributed power system whereby each applicator control box (A, B, C) receives system power (28) for operating its associated applicator (12, 14).

9. The system of claim 1, wherein said system controller (22) comprises control software (42) that receives input instructions from an operator to configure said melter (10) and said applicator (12, 14) for a selected application (78), and further to group and name logical control functions together for the selected application (78), allowing collective control of independent devices.

10. The system of claim 9, wherein said control software (42) comprises a graphical user interface program for inputting configuration and logical grouping data to said system controller (22).

## Patentansprüche

1. Verteiltes System zum Regeln des Auftragens von schmelzflüssigem thermoplastischen Material, umfassend:
mindestens eine Auftragsvorrichtung zum Auftragen des Materiales; und eine Schmelzvorrichtung (10) zum Zuführen von schmelzflüssigem Material zum Einsatz mindestens einer Auftragsvorrichtung (12,14);
**gekennzeichnet durch** eine Systemregelung (22) mit einem Netzwerk zur Übertragung von Daten zwischen der Regelung (22) und mehreren verteilten Reglermodulen (24) an einem gemeinsam genutzten Bus (26);
wobei die Schmelzvorrichtung (10) mehrere Schmelzvorrichtungsreglermodule (48, 50, 52, 53) zum Regeln der Verteilung des Materiales an mindestens die eine Auftragsvorrichtung (12, 14) umfasst, und alle Schmelzvorrichtungsreglermodule (48, 50, 52, 53) mit dem Netzwerk verbunden sind;
wobei die Auftragsvorrichtung (12,14) mindestens einen Auftragsvorrichtungsreglermodul (24) umfasst, und der Auftragsvorrichtungsreglermodul (24) mit dem Netzwerk verbunden ist;
wobei die Systemregelung (22) über das Netzwerk Instruktionen an eine auswählbare Anzahl der Reglermodule (24, 48, 50, 52, 53) überträgt, basierend auf einem auswählbaren Auftragen des Materiales, und über das Netzwerk Daten von jedem bei dem ausgewählten Auftragen verwendeten Reglermodul (24, 48, 50, 52, 53) empfängt.

2. System gemäß Anspruch 1, bei dem die Schmelzvorrichtung (10) die Temperatur, den Druck und die Verteilung des schmelzflüssigen Materiales von der Schmelzvorrichtung (10) zu einer ersten Vielzahl der Auftragsvorrichtungen (12,14) auf von der Systemregelung (22) zu den Schmelzvorrichtungsreglermodulen (48, 50, 52, 53) empfangenen Instruktionen basierend regelt, und bei dem alle Auftragsvorrichtungen (12,14) die Temperatur und Verteilung des Materials basierend auf von der Systemregelung (22) zu den Auftragsvorrichtungsreglermodulen (24) empfangenen Instruktionen regelt.

3. System gemäß Anspruch 2, bei dem die Schmelzvorrichtung (10) eine erste Verteilerstückanordnung (80) zum Verteilen des Materiales an die erste Vielzahl von Auftragsvorrichtungen (14) umfasst, wobei die Systemregelung (22) die erste Vielzahl der Auftragsvorrichtungen (14) und die erste Verteilerstückanordnung (80) als eine hydraulische Gruppe (76) logisch gruppiert und unabhängig regelt.

4. System gemäß Anspruch 3, bei dem die Systemregelung (22) eine Behältergruppe (74) logisch regelt, die Material zu der ersten hydraulischen Gruppe (76a) und einer zweiten hydraulischen Gruppe (76b) zuführt, wobei die zweite hydraulische Gruppe (76b) eine zweite Verteilerstückanordnung (82) in der Schmelzvorrichtung (10) zum Verteilen des Materiales zu einer zweiten Vielzahl von Auftragsvorrichtungen (12) umfasst.

5. System gemäß Anspruch 4, bei dem die Systemregelung (22) mehrere der Schmelzvorrichtungen (10) logisch regelt, wobei alle Schmelzvorrichtungen (10) mindestens eine Behältergruppe (74) und mindestens eine hydraulische Gruppe (76) umfassen, die mehrere Auftragsvorrichtungen (12,14) besitzt.

6. System gemäß Anspruch 2, bei dem alle Auftragsvorrichtungen (12,14) aus der eine druckgespeiste Auftragsvorrichtung (12) und eine Dosierauftragsvorrichtung (14) umfassenden Gruppe ausgewählt werden.

7. System gemäß Anspruch 2, bei dem die mehreren Auftragsvorrichtungen (12,14) mehrere Dosierauftragsvorrichtungen (14), die in einer verketteten Konfiguration hydraulisch verbunden sind, und mindestens eine druckgespeiste Auftragsvorrichtung (12) umfassen.

8. System gemäß Anspruch 1, bei dem die Auftragsvorrichtungsreglermodule (24) in einem Auftragsvorrichtungsreglergehäuse (A, B, C) an ihrer zugehörigen Auftragsvorrichtung (12, 14) aufgenommen sind, wobei das System außerdem ein verteiltes Energiesystem umfasst, und jedes Auftragsvorrichtungsreglergehäuse (A, B, C) Systemenergie (28) zum Betrieb ihrer zugehörigen Auftragsvorrichtung (12, 14) erhält.

9. System gemäß Anspruch 1, bei dem die Systemregelung (22) Regelungssoftware (42) umfasst, die Eingabeinstruktionen von einem Bediener zum Konfigurieren der Schmelzvorrichtung (10) und der Auftragsvorrichtung (12, 14) für eine ausgewählte Anwendung (78), und des weiteren zum Gruppieren und Benennen logischer Regelungsfunktionen für die ausgewählte Anwendung (78) erhält, was die gemeinsame Regelung von unabhängigen Einrichtungen erlaubt.

10. System gemäß Anspruch 9, bei dem die Regelungssoftware (42) eine graphische Benutzeroberfläche zum Eingeben von Konfigurationsdaten und Daten zum logischen Gruppieren in die Systemregelung (22) umfasst.

## Revendications

1. Système distribué pour contrôler l'application de matériau thermoplastique fondu comprenant :
au moins un applicateur pour le dépôt du matériau ; et un four à fusion (10) permettant d'apporter le matériau fondu à au moins un applicateur (12, 14) ;
**caractérisé par** un dispositif de contrôle (22) du système comprenant un réseau pour transmettre des informations entre ledit dispositif de contrôle (22) et une pluralité de modules de commande répartis (24) le long d'un bus partagé (26) ;
ledit four à fusion (10) comprenant une pluralité de modules de commande du four à fusion (48, 50, 52, 53) pour contrôler le dépôt du matériau audit au moins un applicateur (12, 14), chacun desdits modules de commande du four à fusion (48, 50, 52, 53) étant raccordé audit réseau ;
ledit applicateur (12, 14) comprenant au moins un module de commande de l'applicateur (24), ledit module de commande de l'applicateur (24) étant raccordé audit réseau ;
dans lequel ledit dispositif de contrôle du système (22) transmet les instructions à un certain nombre sélectionnable dedits modules de commande (24, 48, 50, 52, 53) à travers ledit réseau, sur la base d'une application sélectionnable du matériau et reçoit, à travers ledit réseau, les informations provenant de chaque module de commande (24, 48, 50, 52, 53) utilisé dans l'application choisie.

2. Système selon la revendication 1, dans lequel ledit four à fusion (10) contrôle la température, la pression et le dépôt de matériau fondu du four (10) vers une première pluralité desdits applicateurs (12, 14) en fonction des instructions reçues dudit dispositif de contrôle de système (22) auxdits modules de commande du four à fusion (48, 50, 52, 53) et dans lequel chacun de ladite pluralité d'applicateurs (12, 14) contrôle la température et le dépôt de matériau en fonction des instructions reçues dudit dispositif de contrôle de système (22) auxdits modules de commande de l'applicateur (24).

3. Système selon la revendication 2, dans lequel ledit four à fusion (10) comprend un premier ensemble de collecteur (80) pour distribuer le matériau vers ladite première pluralité d'applicateurs (14), dans lequel ledit dispositif de contrôle du système (22) regroupe logiquement et commande indépendamment ladite première pluralité d'applicateurs (14) et ledit premier ensemble de collecteur (80) comme un groupe hydraulique (76).

4. Système selon la revendication 3, dans lequel ledit dispositif de contrôle du système (22) commande logiquement un groupe réservoir (74) qui fournit le matériau audit premier groupe hydraulique (76a) et à un second groupe hydraulique (76b), ledit second groupe hydraulique (76b) comprenant un second ensemble de collecteur (82) dans ledit four à fusion (10) pour distribuer le matériau à une seconde pluralité d'applicateurs (12).

5. Système selon la revendication 4, dans lequel ledit dispositif de contrôle du système (22) commande logiquement une pluralité desdits fours à fusion (10), chacun de ladite pluralité desdits fours à fusion (10) comprenant au moins un groupe réservoir (74) et au moins un groupe hydraulique (76) ayant une pluralité d'applicateurs (12, 14).

6. Système selon la revendication 2, dans lequel chacun de ladite pluralité d'applicateurs (12, 14) est choisi dans le groupe comprenant l'applicateur alimenté sous pression (12) et l'applicateur mesuré (14).

7. Système selon la revendication 2, dans lequel ladite pluralité d'applicateurs (12, 14) comprend une pluralité d'applicateurs mesurés (14) hydrauliquement reliés dans une configuration en marguerite et au moins un applicateur alimenté sous pression (12).

8. Système selon la revendication 1, dans lequel lesdits modules de commande de l'applicateur (24) sont contenus dans un boîtier de commande de l'applicateur (A, B, C) à leur applicateur associé (12, 14), le système comprenant en outre un système d'alimentation distribué par lequel chaque boîtier de commande de l'applicateur (A, B, C) reçoit l'alimentation du système (28) pour faire fonctionner son applicateur associé (12, 14).

9. Système selon la revendication 1, dans lequel ledit dispositif de contrôle du système (22) comprend un logiciel de commande (42) qui reçoit les instructions saisies par un opérateur pour configurer ledit four à fusion (10) et ledit applicateur (12, 14) pour une application choisie (78) et ensuite pour regrouper et nommer ensemble les fonctions de commande logique pour l'application choisie (78), permettant une commande collective des dispositifs indépendants.

10. Système selon la revendication 9, dans lequel ledit logiciel de commande (42) comprend un programme d'interface utilisateur graphique pour saisir la configuration et regrouper les données de manière logique vers ledit dispositif de contrôle du système (22).
